(19) Europäisches Patentamt
European Patent Office
Office européen des brevets

(11) **EP 1 687 810 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **05707482.5**

(22) Anmeldetag: **17.02.2005**

(51) Int Cl.:
***G10L 19/02*** (2006.01)

(86) Internationale Anmeldenummer:
**PCT/EP2005/001652**

(87) Internationale Veröffentlichungsnummer:
**WO 2005/083681 (09.09.2005 Gazette 2005/36)**

(54) **VORRICHTUNG UND VERFAHREN ZUM ERMITTELN EINER QUANTISIERER-SCHRITTWEITE**

DEVICE AND METHOD FOR DETERMINING A QUANTISER STEP SIZE

DISPOSITIF ET PROCEDE POUR DETERMINER UN PAS DE QUANTIFICATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.03.2004 DE 102004009955**

(43) Veröffentlichungstag der Anmeldung:
**09.08.2006 Patentblatt 2006/32**

(73) Patentinhaber: **Fraunhofer-Gesellschaft zur Förderung der angewandten Forschung e.V. 80686 München (DE)**

(72) Erfinder:
- **GRILL, Bernhard**
  **91207 Lauf (DE)**
- **SCHUG, Michael**
  **91056 Erlangen (DE)**
- **TEICHMANN, Bodo**
  **90763 Fürth (DE)**
- **RETTELBACH, Nikolaus**
  **90427 Nürnberg (DE)**

(74) Vertreter: **Zinkler, Franz et al Schoppe, Zimmermann, Stöckeler & Zinkler Postfach 246 82043 Pullach bei München (DE)**

(56) Entgegenhaltungen:
- **QUACKENBUSH S R ED - INSTITUTE OF ELECTRICAL AND ELECTRONICS ENGINEERS: "CODING OF NATURAL AUDIO IN MPEG-4" PROCEEDINGS OF THE 1998 IEEE INTERNATIONAL CONFERENCE ON ACOUSTICS, SPEECH AND SIGNAL PROCESSING. ICASSP '98. SEATTLE, WA, MAY 12 - 15, 1998, IEEE INTERNATIONAL CONFERENCE ON ACOUSTICS, SPEECH AND SIGNAL PROCESSING, NEW YORK, NY : IEEE, US, Bd. VOL. 6 CONF. 23, 12. Mai 1998 (1998-05-12), Seiten 3797-3800, XP000951286 ISBN: 0-7803-4429-4**
- **DOMAZET D ET AL: "Advanced software implementation of MPEG-4 AAC audio encoder" VIDEO/IMAGE PROCESSING AND MULTIMEDIA COMMUNICATIONS, 2003. 4TH EURASIP CONFERENCE FOCUSED ON 2-5 JULY 2003, PISCATAWAY, NJ, USA,IEEE, Bd. 2, 2. Juli 2003 (2003-07-02), Seiten 679-684, XP010650238 ISBN: 953-184-054-7**
- **BRANDENBURG K: "MP3 AND AAC EXPLAINED" PROCEEDINGS OF THE INTERNATIONAL AES CONFERENCE, 1999, Seiten 99-110, XP008004053**

## Beschreibung

Die vorliegende Erfindung bezieht sich auf Audiocodierer und insbesondere auf Audiocodierer, die Transformtionsbasiert sind, d.h., bei denen zu Beginn der Codierer-Pipeline eine Umsetzung einer zeitlichen Darstellung in eine spektrale Darstellung erfolgt.

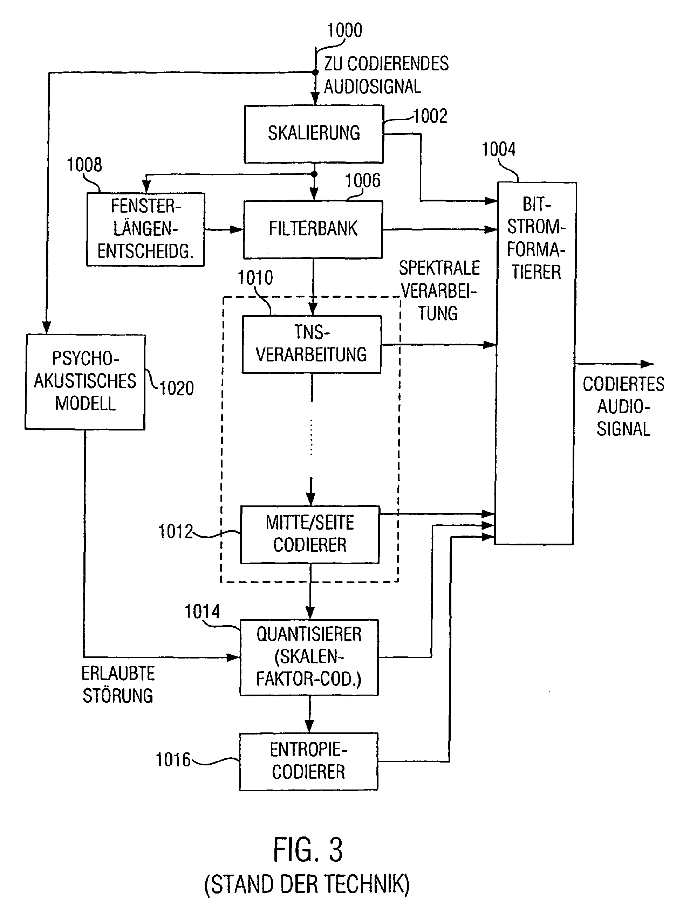

Ein bekannter Transformations-basierter Audiocodierer ist in Fig. 3 gezeigt. Der in Fig. 3 gezeigte Codierer ist im internationalen Standard ISO/IEC 14496-3: 2001 (E), Subpart 4, Seite 4, dargestellt und in der Technik auch als AAC-Codierer bekannt.

Nachfolgend wird der bekannte Codierer dargestellt. An einem Eingang 1000 wird ein zu codierendes Audiosignal eingespeist. Dieses wird zunächst einer Skalierungsstufe 1002 zugeführt, in der eine sogenannte AAC-Verstärkungssteuerung durchgeführt wird, um den Pegel des Audiosignals festzulegen. Seiteninformationen aus der Skalierung werden einem Bitstromformatierer 1004 zugeführt, wie es durch den Pfeil zwischen dem Block 1002 und dem Block 1004 dargestellt ist. Das skalierte Audiosignal wird hierauf einer MDCT-Filterbank 1006 zugeführt. Beim AAC-Codierer implementiert die Filterbank eine modifizierte diskrete Cosinustransformation mit 50 % überlappenden Fenstern, wobei die Fensterlänge durch einen Block 1008 bestimmt wird.

Allgemein gesagt ist der Block 1008 dazu vorhanden, dass transiente Signale mit kürzeren Fenstern gefenstert werden, und dass eher stationäre Signale mit längeren Fenstern gefenstert werden. Dies dient dazu, dass aufgrund der kürzeren Fenster für transiente Signale eine höhere Zeitauflösung (auf Kosten der Frequenzauflösung) erreicht wird, während für eher stationäre Signale eine höhere Frequenzauflösung (auf Kosten der Zeitauflösung) durch längere Fenster erreicht wird, wobei tendenziell längere Fenster bevorzugt werden, da sie einen größeren Codiergewinn versprechen. Am Ausgang der Filterbank 1006 liegen zeitlich betrachtet aufeinanderfolgende Blöcke von Spektralwerten vor, die je nach Ausführungsform der Filterbank MDCT-Koeffizienten, Fourier-Koeffizienten oder auch Subbandsighale sein können, wobei jedes Subbandsignal eine bestimmte begrenzte Bandbreite hat, die durch den entsprechenden Subbandkanal in der Filterbank 1006 festgelegt wird, und wobei jedes Subbandsignal eine bestimmte Anzahl von Subband-Abtastwerten aufweist.

Nachfolgend wird beispielhaft der Fall dargestellt, bei dem die Filterbank zeitlich betrachtet aufeinanderfolgende Blöcke von MDCT-Spektralkoeffizienten ausgibt, die allgemein gesagt, aufeinanderfolgende Kurzzeitspektren des zu codierenden Audiosignals am Eingang 1000 darstellen. Ein Block von MDCT-Spektralwerten wird dann in einen TNS-Verarbeitungsblock 1010 eingespeist, in dem eine zeitliche Rauschformung stattfindet (TNS = temporary noise shaping). Die TNS-Technik wird dazu verwendet, um die zeitliche Form des Quantisierungsrauschens innerhalb jedes Fensters der Transformation zu formen. Dies wird dadurch erreicht, dass ein Filterprozess auf Teile der Spektraldaten jedes Kanals angewendet wird. Die Codierung wird auf einer Fensterbasis durchgeführt. Insbesondere werden die folgenden Schritte ausgeführt, um das TNS-Tool auf ein Fenster spektraler Daten, also auf einen Block von Spektralwerten anzuwenden.

Zunächst wird ein Frequenzbereich für das TNS-Tool ausgewählt. Eine geeignete Auswahl besteht darin, einen Frequenzbereich von 1,5 kHz bis zum höchsten möglichen Skalenfaktorband mit einem Filter abzudecken. Es sei darauf hingewiesen, dass dieser Frequenzbereich von der Abtastrate abhängt, wie es im AAC-Standard (ISO/IEC 14496-3: 2001 (E)) spezifiziert ist.

Anschließend wird eine LPC-Berechnung (LPC = linear predictive coding = lineare prädiktive Codierung) ausgeführt, und zwar mit den spektralen MDCT-Koeffizienten, die in dem ausgewählten Zielfrequenzbereich liegen. Für eine erhöhte Stabilität werden Koeffizienten, die Frequenzen unter 2,5 kHz entsprechen, aus diesem Prozess ausgeschlossen. Übliche LPC-Prozeduren, wie sie aus der Sprachverarbeitung bekannt sind, können für die LPC-Berechnung verwendet werden, beispielsweise der bekannte Levinson-Durbin-Algorithmus. Die Berechnung wird für die maximal zulässige Ordnung des Rauschformungsfilters ausgeführt.

Als Ergebnis der LPC-Berechnung wird der erwartete Prädiktionsgewinn PG erhalten. Ferner werden die Reflexionskoeffizienten oder Parcor-Koeffizienten erhalten.

Wenn der Prädiktionsgewinn eine bestimmte Schwelle nicht überschreitet, wird das TNS-Tool nicht angewendet. In diesem Fall wird eine Steuerinformation in den Bitstrom geschrieben, damit ein Decodierer weiß, dass keine TNS-Verarbeitung ausgeführt worden ist.

Wenn der Prädiktionsgewinn jedoch eine Schwelle überschreitet, wird die TNS-Verarbeitung angewendet.

In einem nächsten Schritt werden die Reflexionskoeffizienten quantisiert. Die Ordnung des verwendeten Rauschformungsfilters wird durch Entfernen aller Reflexionskoeffizienten mit einem Absolutwert kleiner als eine Schwelle von dem "Schwanz" des Reflexionskoeffizienten-Arrays bestimmt. Die Anzahl der verbleibenden Reflexionskoeffizienten liegt in der Größenordnung des Rauschformungsfilters. Eine geeignete Schwelle liegt bei 0,1.

Die verbleibenden Reflexionskoeffizienten werden typischerweise in lineare Prädiktionskoeffizienten umgewandelt, wobei diese Technik auch als "Step-Up"-Prozedur bekannt ist.

Die berechneten LPC-Koeffizienten werden dann als Codierer-Rauschformungsfilterkoeffizienten, also als Prädiktionsfilterkoeffizienten verwendet. Dieses FIR-Filter wird über den spezifizierten Zielfrequenzbereich geführt. Bei der Decodierung wird ein autoregressives Filter verwendet, während bei der Codierung ein sogenanntes Moving-Average-Filter verwendet wird. Schließlich werden noch die Seiteninformationen für das TNS-Tool dem Bitstromformatierer zugeführt, wie es durch den Pfeil dargestellt ist, der zwischen dem Block TNS-Verarbeitung 1010 und dem Bitstromformatierer 1004 in Fig. 3 gezeigt ist.

Hierauf werden mehrere in Fig. 3 nicht gezeigte optionale Tools durchlaufen, wie beispielsweise ein Langzeitprädiktions-Tool, ein Intensity/Kopplungs-Tool, ein Prädiktions-Tool, ein Rauschsubstitutions-Tool, bis schließlich zu einem Mitte/Seite-Codierer 1012 gelangt wird. Der Mitte/Seite-Codierer 1012 ist dann aktiv, wenn das zu codierende Audiosignal ein Multikanalsignal ist, also ein Stereosignal mit einem linken Kanal und einem rechten Kanal. Bisher, also in der Verarbeitungsrichtung vor dem Block 1012 in Fig. 3 wurden der linke und der rechte Stereokanal getrennt voneinander verarbeitet, also skaliert, durch die Filterbank transformiert, der TNS-Verarbeitung unterzogen oder nicht etc.

Im Mitte/Seite-Codierer wird dann zunächst überprüft, ob eine Mitte/Seite-Codierung sinnvoll ist, also überhaupt einen Codiergewinn bringt. Eine Mitte/Seite-Codierung wird dann einen Codiergewinn bringen, wenn der linke und der rechte Kanal eher ähnlich sind, da dann der Mitte-Kanal, also die Summe aus dem linken und dem rechten Kanal nahezu gleich dem linken oder dem rechten Kanal ist, abgesehen von der Skalierung durch den Faktor 1/2, während der Seite-Kanal nur sehr kleine Werte hat, da er gleich der Differenz zwischen dem linken und dem rechten Kanal ist. Damit ist zu sehen, dass dann, wenn der linke und der rechte Kanal annähernd gleich sind, die Differenz annähernd Null ist bzw. nur ganz kleine Werte umfasst, die - so ist die Hoffnung - in einem nachfolgenden Quantisierer 1014 zu Null quantisiert werden und somit sehr effizient übertragen werden können, da dem Quantisierer 1014 ein Entropie-Codierer 1016 nachgeschaltet ist.

Dem Quantisierer 1014 wird von einem psycho-akustischen Modell 1020 eine erlaubte Störung pro Skalenfaktorband zugeführt. Der Quantisierer arbeitet iterativ, d. h. es wird zunächst eine äußere Iterationsschleife aufgerufen, die dann eine innere Iterationsschleife aufruft. Allgemein gesagt wird zunächst, ausgehend von Quantisiererschrittweiten-Startwerten, eine Quantisierung eines Blocks von Werten am Eingang des Quantisierers 1014 vorgenommen. Insbesondere quantisiert die innere Schleife die MDCT-Koeffizienten, wobei eine bestimmte Anzahl von Bits verbraucht wird. Die äußere Schleife berechnet die Verzerrung und modifizierte Energie der Koeffizienten unter Verwendung des Skalenfaktors, um wieder eine innere Schleife aufzurufen. Dieser Prozess wird iteriert, bis ein bestimmter Bedingungssatz erfüllt ist. Für jede Iteration in der äußeren Iterationsschleife wird dabei das Signal rekonstruiert, um die durch die Quantisierung eingeführte Störung zu berechnen und mit der von dem psycho-akustischen Modell 1020 gelieferten erlaubten Störung zu vergleichen. Ferner werden die Skalenfaktoren der nach diesem Vergleich noch als gestört geltenden Frequenzbänder von Iteration zu Iteration um eine oder mehrere Stufen vergrößert, und zwar für jede Iteration der äußeren Iterationsschleife.

Dann, wenn eine Situation erreicht ist, bei der die durch die Quantisierung eingeführte Quantisierungsstörung unterhalb der durch das psycho-akustische Modell bestimmten erlaubten Störung ist, und wenn gleichzeitig Bitanforderungen erfüllt sind, nämlich, dass eine Maximalbitrate nicht überschritten wird, wird die Iteration, also das Analyse-Durch-Synthese-Verfahren beendet, und es werden die erhaltenen Skalenfaktoren codiert, wie es in dem Block 1014 ausgeführt ist und in codierter Form dem Bitstromformatierer 1004 zugeführt, wie es durch den Pfeil gekennzeichnet ist, der zwischen dem Block 1014 und dem Block 1004 gezeichnet ist. Die quantisierten Werte werden dann dem Entropie-Codierer 1016 zugeführt, der typischerweise unter Verwendung mehrerer Huffman-Code-Tabellen für verschiedene Skalenfaktorbänder eine Entropie-Codierung durchführt, um die quantisierten Werte in ein binäres Format zu übertragen. Wie es bekannt ist, wird bei der Entropie-Codierung in Form der Huffman-Codierung auf Code-Tabellen zurückgegriffen, die aufgrund einer erwarteten Signalstatistik erstellt werden, und bei denen häufig auftretende Werte kürzere Code-Wörter bekommen als seltener auftretende Werte. Die entropiecodierten Werte werden dann ebenfalls als eigentliche Hauptinformationen dem Bitstromformatierer 1004 zugeführt, der dann gemäß einer bestimmten Bitstromsyntax ausgangsseitig das codierte Audiosignal ausgibt.

Wie es bereits ausgeführt worden ist, wird bei dieser iterativen Quantisierung dann, wenn die durch eine Quantisierer-Schrittweite eingeführte Störung größer als die Schwelle ist, eine feinere Quantisierer-Schrittweite verwendet, und zwar in der Hoffnung, dass damit das Quantisierungsrauschen abnimmt, weil feiner quantisiert wird.

Dieses Konzept ist dahin gehend nachteilhaft, dass natürlich durch die feinere Quantisierer-Schrittweite die zu übertragende Datenmenge zunimmt und damit der Komprimiergewinn abnimmt.

Die Fachveröffentlichung von S. R. Quackenbush, "Coding of Natural Audio in MPEG-4", Proceedings of the 1998 IEEE International Conference on Acoustics, Speech and Signal Processing, ICASSP' 98, Seattle (USA), 12.-15. Mai 1998, Band 6, Seiten 3797-3800, offenbart Details zur Audiocodierung bei Bitraten im Bereich von 2 kB/s bis 64 kB/s pro Kanal. Insbesondere bei MPEG-2 AAC werden Spektralkoeffizienten unter Verwendung eines ungleichmäßigen Quantisierers pro Skalenfaktorband quantisiert. Das psychoakustische Modell im Codierer stellt die Quantisiererschrittweite ein, so dass das Quantisierungsrauschen durch das Signal maskiert wird. In der nachfolgenden Entropiecodierung werden die Sätze von quantisierten Koeffizienten, die einem Skalenfaktorband zugeordnet sind, in Sections gruppiert, wobei eine ganzzahlige Anzahl von Skalenfaktorbänder in einer Section ist. Die quantisierten Koeffizienten werden Huffman-codiert, und zwar in 2- oder 4-Tupeln unter Verwendung von einem Codebuch pro Section.

Die Aufgabe der vorliegenden Erfindung besteht darin, ein Konzept zum Ermitteln einer Quantisierer-Schrittweite zu schaffen, das einerseits eine geringe Quantisierungsstörung einführt und andererseits einen guten Komprimiergewinn liefert.

Diese Aufgabe wird durch eine Vorrichtung zum Ermitteln einer Quantisierer-Schrittweite gemäß Patentanspruch 1, ein Verfahren zum Ermitteln einer Quantisierer-Schrittweite gemäß Patentanspruch 9 oder ein Computer-Programm gemäß Patentanspruch 10 gelöst.

Der vorliegenden Erfindung liegt die Erkenntnis zugrunde, dass eine zusätzliche Reduktion der Störleistung einerseits und gleichzeitig eine Erhöhung oder zumindest Beibehaltung des Codiergewinns dadurch erreicht werden kann, dass auch dann, wenn die eingeführte Störung größer als eine Schwelle ist, nicht, wie im Stand der Technik, feiner quantisiert wird, sondern zumindest einige gröbere Quantisierer-Schrittweiten ausprobiert werden. Es hat sich herausgestellt, dass auch bei gröberen Quantisierer-Schrittweiten Reduktionen der durch die Quantisierung eingeführten Störung erreicht werden können, und zwar dann, wenn die gröbere Quantisierer-Schrittweite den zu quantisierenden Wert besser "trifft" als die feinere Quantisierer-Schrittweite. Dieser Effekt basiert darauf, dass der Quantisierungsfehler nicht nur von der Quantisierer-Schrittweite abhängt, sondern natürlich auch von den zu quantisierenden Werten. Liegen die zu quantisierenden Werte nah bei den Schrittweiten der gröberen Quantisierer-Schrittweite, so wird eine Reduktion des Quantisierungsrauschens bei gleichzeitigem größeren Komprimierungsgewinn (da gröber quantisiert worden ist), erreicht werden.

Das erfindungsgemäße Konzept ist besonders dann sehr profitabel, wenn bereits für die erste Quantisierer-Schrittweite, ausgehend von der der Schwellenvergleich durchgeführt wird, sehr gute geschätzte Quantisierer-Schrittweiten vorliegen. Bei einem bevorzugten Ausführungsbeispiel der vorliegenden Erfindung wird es daher bevorzugt, die erste Quantisierer-Schrittweite durch eine direkte Berechnung auf der Basis der mittleren Rauschenergie und nicht auf der Basis eines Worst-Case-Szenarios zu ermitteln. Damit können die Iterationsschleifen gemäß dem Stand der Technik entweder bereits erheblich reduziert oder vollkommen obsolet werden.

Die erfindungsgemäße Nachbearbeitung der Quantisierer-Schrittweite probiert dann bei dem Ausführungsbeispiel nur noch einmal eine gröbere Quantisierer-Schrittweite aus, um von dem beschriebenen Effekt des "besseren Treffens" eines zu quantisierenden Werts zu profitieren. Wird dann festgestellt, dass die durch die gröbere Quantisierer-Schrittweite erhaltene Störung kleiner als die vorherige Störung oder sogar kleiner als die Schwelle ist, dann kann weiter iteriert werden, um eine noch gröbere Quantisierer-Schrittweite zu probieren. Dieses Prozedere der Vergröberung der Quantisierer-Schrittweite wird so lange fortgesetzt, bis die eingeführte Störung wieder zunimmt. Dann ist ein Abbruchkriterium erreicht, so dass mit der gespeicherten Quantisierer-Schrittweite, die die geringste eingeführte Störung lieferte, quantisiert wird und das Codierprozedere wie benötigt weitergeführt wird.

Bei einem alternativen Ausführungsbeispiel der vorliegenden Erfindung kann zum Schätzen der ersten Quantisierer-Schrittweite ein Analyse-Durch-Synthese-Ansatz wie im Stand der Technik durchgeführt werden, der so lange stattfindet, bis ein dortiges Abbruchkriterium erreicht wird. Dann kann die erfindungsgemäße Nachbearbeitung eingesetzt werden, um schließlich zu überprüfen, ob nicht doch mit einer gröberen Quantisierer-Schrittweite zu genauso guten Störungsergebnissen oder sogar zu besseren Störungsergebnissen gekommen werden kann. Wird dann festgestellt, dass eine gröbere Quantisierer-Schrittweite genauso gut oder sogar noch besser ist, im Hinblick auf die eingeführte Störung, so wird diese zum Quantisieren genommen. Wird dagegen festgestellt, dass die gröbere Quantisierung nichts bringt, so wird die ursprünglich z. B. durch ein Analyse/Synthese-Verfahren ermittelte Quantisierer-Schrittweite zum letztendlichen Quantisieren verwendet.

Erfindungsgemäß können somit beliebige Quantisierer-Schrittweiten eingesetzt werden, um einen ersten Schwellenvergleich durchzuführen. Es ist unerheblich, ob diese erste Quantisierer-Schrittweite bereits durch Analyse/Synthese-Schemen oder sogar durch eine direkte Berechnung der Quantisierer-Schrittweiten ermittelt worden ist.

Bei einem bevorzugten Ausführungsbeispiel der vorliegenden Erfindung wird dieses Konzept zum Quantisieren eines im Frequenzbereich vorliegenden Audiosignals eingesetzt. Dieses Konzept kann jedoch auch zur Quantisierung eines Zeitbereichsignals eingesetzt werden, das Audio- und/oder Videoinformationen aufweist.

Ferner sei darauf hingewiesen, dass die Schwelle, mit der verglichen wird, eine psychoakustische oder psychooptische erlaubte Störung ist, oder eine andere Schwelle, für die der Wunsch besteht, dass sie unterschritten wird. So kann diese Schwelle tatsächlich eine von einem psychoakustischen Modell gelieferte erlaubte Störung sein. Diese Schwelle kann jedoch auch eine vorher ermittelte eingeführte Störung für die ursprüngliche Quantisierer-Schrittweite sein oder irgendeine andere Schwelle.

Es sei darauf hingewiesen, dass die quantisierten Werte nicht unbedingt Huffman-codiert werden müssen, sondern dass dieselben alternativ mit einer anderen Entropie-Codierung codiert werden kann, wie beispielsweise einer arithmetischen Codierung. Alternativ können die quantisierten Werte auch binär codiert werden, da auch diese Codierung dazu führt, dass zur Übertragung von kleineren Werten oder von Werten gleich Null weniger Bits benötigt werden als zur Übertragung von größeren Werten oder allgemein von Werten ungleich Null.

Vorzugsweise kann zur Ermittlung der Ausgangswerte, also der 1 Quantisiererschrittweite, auf den iterativen Ansatz ganz oder wenigstens zu großen Teilen verzichtet werden, wenn die Quantisierer-Schrittweite aus einer direkten Rauschenergieabschätzung ermittelt wird. Die Berechnung der Quantisierer-Schrittweite aus einer exakten Rauschenergieabschätzung ist erheblich schneller als eine Berechnung in einer Analyse-durch-Synthese-Schleife, da die Werte für die Berechnung direkt vorliegen. Es müssen nicht erst mehrere Quantisierungsversuche unternommen und verglichen werden, bis eine für die Codierung günstige Quantisierer-Schrittweite gefunden ist.

Da es sich bei der verwendeten Quantisiererkennlinie jedoch um eine nichtlineare Kennlinie handelt, muss die nichtlineare Kennlinie bei der Rauschenergieabschätzung berücksichtigt werden. Es kann nicht mehr die einfache Rauschenergieabschätzung für einen linearen Quantisierer verwendet werden, da sie zu ungenau ist. Erfindungsgemäß wird ein Quantisierer mit folgender Quantisierungskennlinie verwendet:

$$y_i = round\left[\left(\frac{x_i}{q}\right)^{\alpha} + s\right]$$

.

In der vorstehenden Gleichung sind die $x_i$ die zu quantisierenden Spektralwerte. Die Ausgangswerte sind durch $y_i$ gekennzeichnet, wobei $y_i$ somit die quantisierten Spektralwerte sind. q ist die Quantisierer-Schrittweite. Round ist die Rundungsfunktion, die vorzugsweise die Funktion nint ist, wobei "nint" für "nearest integer" steht. Der Exponent, der den Quantisierer zu einem nichtlinearen Quantisierer macht, ist mit $\alpha$ bezeichnet, wobei $\alpha$ ungleich 1 ist. Typischerweise wird der Exponent $\alpha$ kleiner als 1 sein, so dass der Quantisierer eine komprimierende Charakteristik hat. Bei Layer 3 und bei AAC beträgt der Exponent $\alpha$ gleich 0,75. Der Parameter s ist eine additive Konstante, die irgendeinen Wert haben kann, die jedoch auch Null sein kann.

Erfindungsgemäß wird zur Berechnung der Quantisierer-Schrittweite folgender Zusammenhang verwendet:

$$\sum_i |\Delta x_i|^2 \approx \frac{q^{2\alpha}}{12\alpha^2} \cdot \sum_i x_i^{2(1-\alpha)}$$

Mit $\alpha$ gleich ¾ ergibt sich folgende Gleichung:

$$\sum_i |\Delta x_i|^2 \approx \frac{q^{3/2}}{6.75} \cdot \sum_i |x_i|^{1/2}$$

In diesen Gleichungen steht der linke Term für die in einem Frequenzband erlaubte Störung THR, welche von einem Psychoakustik-Modul für ein Skalenfaktorband mit den Frequenzlinien von i gleich $i_1$ bis i gleich $i_2$ geliefert wird. Die vorstehende Gleichung ermöglicht eine nahezu exakte Abschätzung der durch eine Quantisierer-Schrittweite q eingeführten Störung für einen nichtlinearen Quantisierer mit der vorstehenden Quantisiererkennlinie mit dem Exponenten $\alpha$ ungleich 1, wobei die Funktion nint aus der Quantisierergleichung die eigentliche Quantisierergleichung durchführt, nämlich eine Rundung zur nächsten Ganzzahl.

Es sei darauf hingewiesen, dass statt der Funktion nint eine beliebige Rundungsfunktion round verwendet werden kann, nämlich z.B. auch eine Rundung auf die nächste geradzahlige oder nächste ungeradzahlige Ganzzahl oder eine Rundung auf die nächste 10er-Zahl etc. Allgemein gesagt ist die Rundungsfunktion dafür verantwortlich, dass ein Wert aus einem Wertevorrat mit einer bestimmten Anzahl von erlaubten Werten auf einen Wertevorrat mit einer kleineren bestimmten zweiten Anzahl von Werten abgebildet wird.

Bei einem bevorzugten Ausführungsbeispiel der vorliegenden Erfindung sind die quantisierten Spektralwerte bereits zuvor einer TNS-Verarbeitung und, wenn es sich um z.B. Stereosignale handelt, einer Mitte/Seite-Codierung unterzogen worden, sofern die Kanäle derart waren, dass der Mitte/Seite-Codierer aktiviert worden ist.

Mit dem Zusammenhang zwischen Quantisierer-Schrittweite und Skalenfaktor, der gemäß folgender Gleichung gegeben ist,

$$q = 2^{(1/4) \cdot scf}$$

kann somit der Skalenfaktor für jedes Skalenfaktorband direkt angegeben werden und einem entsprechenden Audiocodierer eingespeist werden. Der Skalenfaktor ergibt sich aus folgender Gleichung.

$$\Leftrightarrow scf = 8.8585 \cdot \left[ \log_{10}(6.75 \cdot THR) - \log_{10}(FFAC) \right]; \qquad \sum_i |x_i|^{1/2} = FFAC$$

Bei einem bevorzugten Ausführungsbeispiel der vorliegenden Erfindung kann noch eine Nachbearbeitungsiteration eingesetzt werden, die auf einem Analyse-durch-Synthese-Prinzip basiert, um die direkt ohne Iteration berechnete Quantisierer-Schrittweite für jedes Skalenfaktorband noch etwas zu variieren, um das tatsächliche Optimum zu erreichen.

Im Vergleich zum Stand der Technik ermöglicht jedoch die bereits sehr genaue Berechnung der Startwerte eine sehr kurze Iteration, obgleich sich herausgestellt hat, dass in den allermeisten Fällen auf die nachgeschaltete Iteration gänzlich verzichtet werden kann.

Das bevorzugte Konzept, das auf der Berechnung der Schrittweite mit Hilfe der mittleren Rauschenergie basiert, liefert somit eine gute und realistische Abschätzung, da sie nicht, wie im Stand der Technik, mit einem Worst-Case-Szenario arbeitet, sondern einen Erwartungswert des Quantisierungsfehlers als Grundlage verwendet und somit bei subjektiv äquivalenter Qualität eine effizientere Codierung der Daten mit erheblich geringerer Bitzahl erlaubt. Des weiteren ist durch die Tatsache, dass auf die Iteration komplett verzichtet werden kann bzw. dass die Anzahl der Iterationsschritte deutlich reduziert werden kann, ein wesentlich schnellerer Codierer erreichbar. Dies ist insbesondere deswegen bemerkenswert, weil die Iterationsschleifen im bekannten Codierer wesentlich für den Gesamtzeitbedarf des Codierers waren. Somit führt bereits eine Reduktion um einen oder wenige Iterationsschritte zu einer beträchtlichen Zeiteinsparung des Codierers insgesamt.

Bevorzugte Ausführungsbeispiele der vorliegenden Erfindung werden nachfolgend bezugnehmend auf die beiliegenden Zeichnungen detailliert erläutert. Es zeigen:

Fig. 1 ein Blockschaltbild einer Vorrichtung zum Ermitteln eines quantisierten Audiosignals;

Fig. 2 ein Ablaufdiagramm zur Darstellung der Nachbearbeitung gemäß einem bevorzugten Ausführungsbeispiel der vorliegenden Erfindung;

Fig. 3 ein Blockschaltbild eines bekannten Codierers gemäß dem AAC-Standard;

Fig. 4 eine Darstellung der Reduktion der Quantisierungsstörung durch eine gröbere Quantisierer-Schrittweite; und

Fig. 5 ein Blockschaltbild der erfindungsgemäßen Vorrichtung zum Ermitteln einer Quantisierer-Schrittweite zum Quantisieren eines Signals.

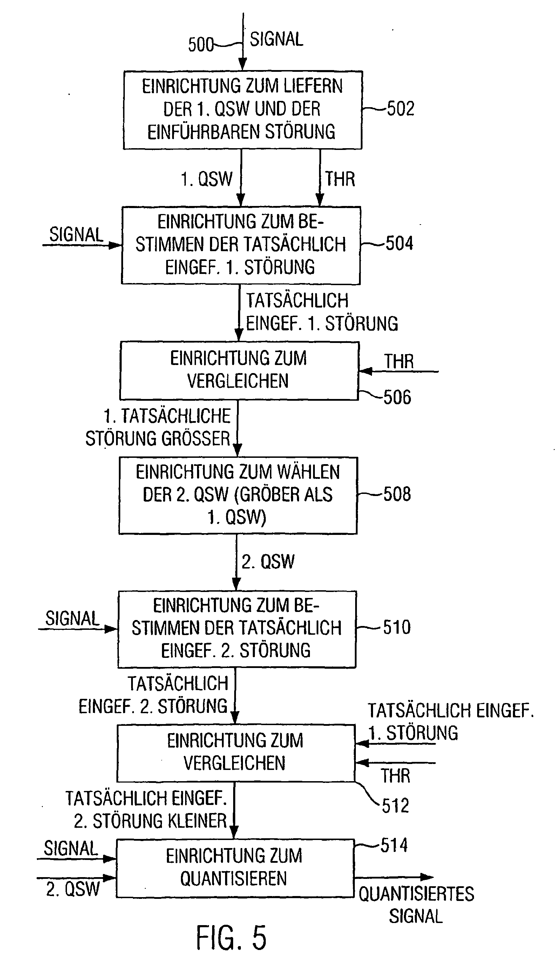

Nachfolgend wird bezugnehmend auf Fig. 5 das erfindungsgemäße Konzept dargestellt. Fig. 5 zeigt eine schematische Darstellung einer Vorrichtung zum Ermitteln einer Quantisierer-Schrittweite zum Quantisieren eines Signals, das Audio- oder Videoinformationen aufweist und über einen Signaleingang 500 bereitgestellt wird. Das Signal wird einer Einrichtung 502 zum Liefern einer ersten Quantisierer-Schrittweite (QSW) und zum Liefern einer Störungsschwelle zugeführt, die nachfolgend auch als einführbare Störung bezeichnet wird. Es sei darauf hingewiesen, dass die Störungsschwelle irgendeine Schwelle sein kann. Vorzugsweise wird es jedoch eine psychoakustische oder psychooptisch einführbare Störung sein, wobei diese Schwelle so gewählt ist, dass ein Signal, in das die Störung eingeführt worden ist, dennoch vom menschlichen Zuhörer oder Betrachter als ungestört wahrgenommen wird.

Die Schwelle (THR) sowie die erste Quantisierer-Schrittweite werden einer Einrichtung 504 zum Bestimmen der durch die erste Quantisierer-Schrittweite eingeführten tatsächlichen ersten Störung zugeführt. Die Bestimmung der tatsächlich eingeführten Störung findet vorzugsweise durch Quantisieren mit der ersten Quantisierer-Schrittweite, durch Requantisieren unter Verwendung der ersten Quantisierer-Schrittweite und durch Berechnung des Abstands zwischen dem ursprünglichen Signal und dem requantisierten Signal statt. Vorzugsweise, wenn Spektralwerte verarbeitet werden, werden von korrespondierenden Spektralwerten des ursprünglichen Signals und des requantisierten Signals die Quadrate gebildet, um dann die Differenz der Quadrate zu bestimmen. Alternative Abstandsbestimmungsmethoden können eingesetzt werden.

Die Einrichtung 504 liefert einen Wert für eine durch die erste Quantisierer-Schrittweite tatsächlich eingeführte erste Störung. Diese wird zusammen mit der Schwelle THR einer Einrichtung 506 zum Vergleichen zugeführt. Die Einrichtung 506 führt einen Vergleich zwischen der Schwelle THR und der ersten tatsächlich eingeführten Störung durch. Ist die erste tatsächlich eingeführte Störung größer als die Schwelle, so wird die Einrichtung 506 eine Einrichtung 508 zum Wählen einer zweiten Quantisierer-Schrittweite aktivieren, wobei die Einrichtung 508 ausgebildet ist, um die zweite Quantisierer-Schrittweite gröber, also größer als die erste Quantisierer-Schrittweite zu wählen. Die von der Einrichtung 508 gewählte zweite Quantisierer-Schrittweite wird einer Einrichtung 510 zum Bestimmen der tatsächlich eingeführten zweiten Störung zugeführt. Hierzu erhält die Einrichtung 510 das ursprüngliche Signal sowie die zweite Quantisierer-Schrittweite und führt wieder eine Quantisierung mit der zweiten Quantisierer-Schrittweite, eine Requantisierung mit der zweiten Quantisierer-Schrittweite und eine Abstandsberechnung zwischen dem requantisierten Signal und dem ursprünglichen Signal durch, um ein Maß für die tatsächlich eingeführte zweite Störung einer Einrichtung 512 zum Vergleichen zuzuführen. Die Einrichtung 512 zum Vergleichen vergleicht die tatsächlich eingeführte zweite Störung mit der tatsächlich eingeführten ersten Störung oder mit der Schwelle THR. Ist die tatsächlich eingeführte zweite Störung kleiner als die tatsächlich eingeführte erste Störung oder sogar kleiner als die Schwelle THR, so wird die zweite Quantisierer-Schrittweite zum Quantisieren des Signals verwendet.

Es sei darauf hingewiesen, dass das in Fig. 5 gezeigte Konzept lediglich schematisch ist. Selbstverständlich müssen zum Durchführen der Vergleiche in den Blöcken 506 und 512 nicht unbedingt getrennte Vergleichseinrichtungen vorgesehen sein, sondern es kann auch eine einzige Vergleichseinrichtung vorgesehen sein, die entsprechend angesteuert wird. Dasselbe gilt für die Einrichtungen 504 und 510 zum Bestimmen der tatsächlich eingeführten Störungen. Auch sie müssen nicht unbedingt als getrennte Einrichtungen ausgeführt sein.

Darüber hinaus wird darauf hingewiesen, dass die Einrichtung zum Quantisieren nicht unbedingt als getrennte Einrichtung von der Einrichtung 510 ausgeführt sein muss. Typischerweise werden nämlich die durch die zweite Quantisierer-Schrittweite quantisierten Signale bereits in der Einrichtung 510 erzeugt, wenn die Einrichtung 510 eine Quantisierung und Requantisierung durchführt, um die tatsächlich eingeführte Störung zu ermitteln. Die dort erhaltenen quantisierten Werte können auch abgespeichert werden und dann, wenn die Einrichtung 512 zum Vergleichen ein positives Ergebnis liefert, als quantisiertes Signal ausgegeben werden, so dass die Einrichtung 514 zum Quantisieren gewissermaßen mit der Einrichtung 510 zum Bestimmen der tatsächlich eingeführten zweiten Störung "verschmilzt".

Bei einem bevorzugten Ausführungsbeispiel der vorliegenden Erfindung ist die Schwelle THR die psychoakustisch bestimmte maximal einführbare Störung, wobei in diesem Fall das Signal ein Audiosignal ist. Die Schwelle THR wird hierbei von einem psychoakustischen Modell geliefert, das herkömmlich arbeitet und für jedes Skalenfaktorband eine in dieses Skalenfaktorband geschätzte einführbare maximale Quantisierungsstörung liefert. Die maximal einführbare Störung basiert auf der Maskierungsschwelle dahingehend, dass sie identisch zu der Maskierungsschwelle ist oder von der Maskierungsschwelle abgeleitet wird, dahingehend, dass z. B. eine Codierung mit einem Sicherheitsabstand durchgeführt wird, derart, dass die einführbare Störung kleiner als die Maskierungsschwelle ist, oder dass eine eher offensive Codierung im Sinne einer Bitratenreduktion durchgeführt wird, und zwar dahingehend, dass die erlaubte Störung über der Maskierungsschwelle liegt.

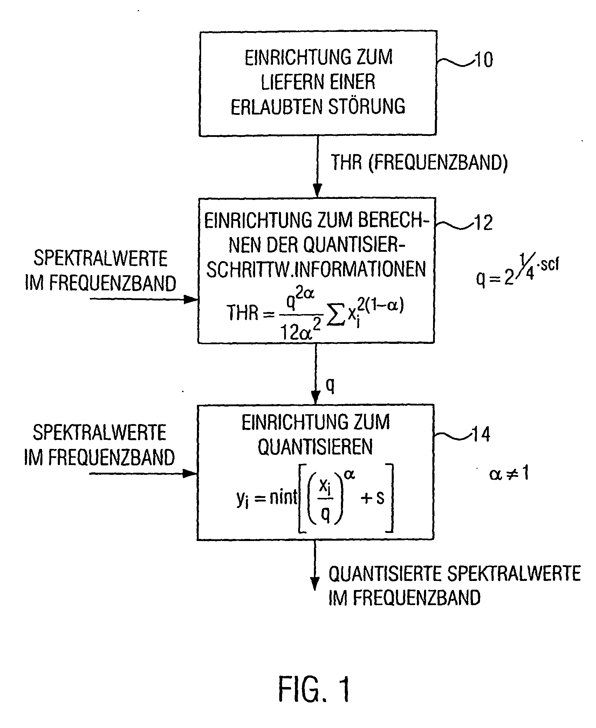

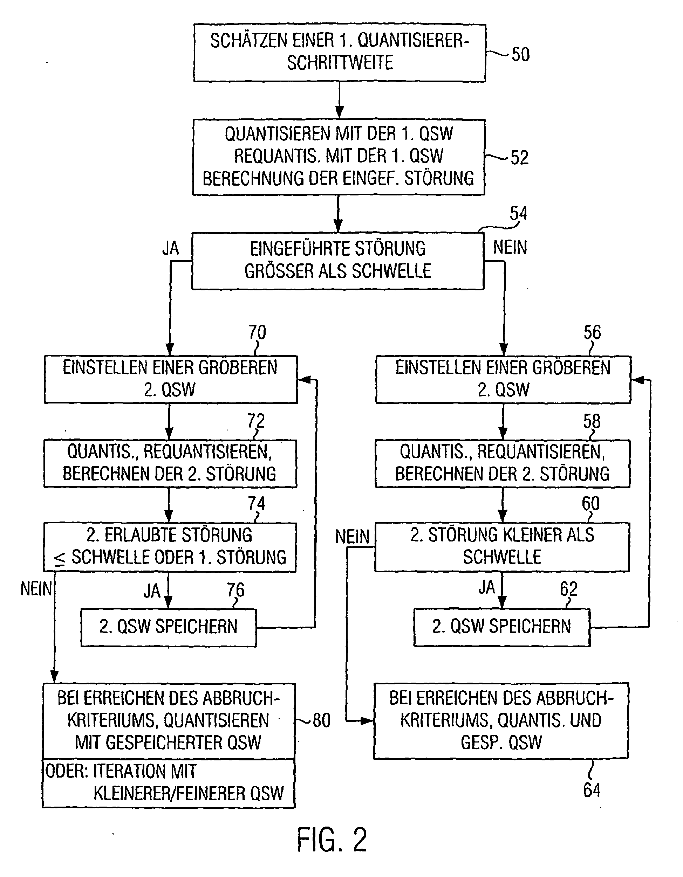

Nachfolgend wird bezugnehmend auf Fig. 1 eine bevorzugte Art und Weise zur Implementierung der Einrichtung 502 zum Liefern der ersten Quantisierer-Schrittweite dargestellt. Insofern sind die Funktionalitäten der Einrichtung 50 von Fig. 2 und der Einrichtung 502 von Fig. 5 gleich. Vorzugsweise ist die Einrichtung 502 ausgebildet, um die Funktionalitäten der Einrichtung 10 und der Einrichtung 12 von Fig. 1 zu haben. Ferner ist bei diesem Beispiel der Quantisierer 514 in Fig. 5 gleich dem Quantisierer 14 in Fig. 1 ausgebildet.

Nachfolgend wird ferner bezugnehmend auf Fig. 2 ein komplettes Prozedere dargestellt, das dann, wenn die eingeführte Störung größer als die Schwelle ist, ebenfalls gröbere Quantisierer-Schrittweiten versucht.

Darüber hinaus ist der linke Zweig in Fig. 2, der das erfindungsgemäße Konzept darstellt, dahingehend erweitert, dass dann, wenn die eingeführte Störung größer als die Schwelle ist und die Vergröberung der Quantisierer-Schrittweite nichts bringt, und wenn Bitratenanforderungen nicht besonders streng sind bzw. in der "Bitsparkasse" noch etwas Platz ist, auch eine Iteration mit einer kleineren, d. h. feineren Quantisierer-Schrittweite durchgeführt wird.

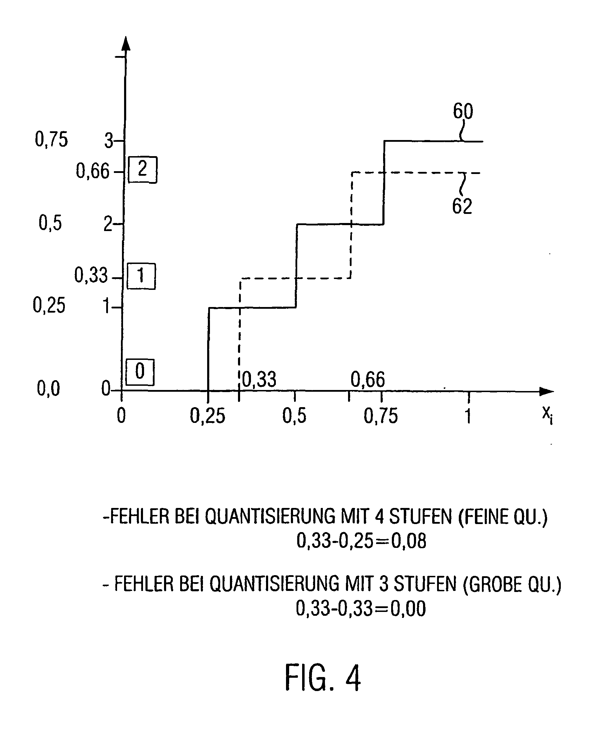

Schließlich wird nachfolgend bezugnehmend auf Fig. 4 der Effekt dargestellt, auf dem die vorliegende Erfindung basiert, nämlich dass trotz Vergröberung der Quantisierer-Schrittweite ein geringeres Quantisierungsrauschen und damit einhergehend eine Erhöhung des Komprimierungsgewinns erhaltbar sind.

Fig. 1 zeigt eine Vorrichtung zum Ermitteln eines quantisierten Audiosignals, das als spektrale Darstellung in Form von Spektralwerten gegeben ist. Insbesondere sei darauf hingewiesen, dass, wenn - bezugnehmend auf Fig. 3 - keine TNS-Verarbeitung und keine Mitte/Seite-Codierung vorgenommen worden sind, die Spektralwerte direkt die Ausgangswerte der Filterbank sind. Wird jedoch nur eine TNS-Verarbeitung, jedoch keine Mitte/Seite-Codierung vorgenommen, so sind die in den Quantisierer 1015 eingespeisten Spektralwerte spektrale Restwerte, wie sie aus der TNS-Prediktionsfilterung entstehen.

Wird eine TNS-Verarbeitung samt Mitte/Seite-Codierung eingesetzt, so sind die in die erfindungsgemäße Vorrichtung eingespeisten Spektralwerte Spektralwerte eines Mitte-Kanals oder Spektralwerte eines Seite-Kanals.

Die erfindungsgemäße Vorrichtung umfasst zunächst eine Einrichtung zum Liefern einer erlaubten Störung, die in Fig. 1 mit 10 bezeichnet ist. Als Einrichtung zum Liefern einer erlaubten Störung kann das in Fig. 3 gezeigte psychoakustische Modell 1020 dienen, das typischerweise ausgebildet ist, um für jedes Skalenfaktorband, also für eine Gruppe von mehreren spektral aneinander angrenzenden Spektralwerten, eine erlaubte Störung oder Schwelle zu liefern, die auch als THR bezeichnet wird. Die erlaubte Störung basiert auf der psychoakustischen Maskierungsschwelle und gibt an, wie viel Energie in ein ursprüngliches Audiosignal eingeführt werden kann, ohne dass die Störenergie vom menschlichen Ohr wahrgenommen wird. Anders ausgedrückt ist die erlaubte Störung der künstlich eingeführte (durch die Quantisierung) Signalanteil, der von dem eigentlichen Audiosignal maskiert wird.

Die Einrichtung 10 ist abgebildet, um die erlaubte Störung THR für ein Frequenzband, vorzugsweise ein Skalenfaktorband, zu berechnen und einer nachgeschalteten Einrichtung 12 zuzuführen. Die Einrichtung 12 dient zum Berechnen einer Quantisierer-Schrittweiten-Information für das Frequenzband, für das die erlaubte Störung THR angegeben worden ist. Die Einrichtung 12 ist ausgebildet, um die Quantisierer-Schrittweiten-Informationen q einer nachgeschalteten Einrichtung 14 zum Quantisieren zuzuführen. Die Einrichtung 14 zum Quantisieren arbeitet nach der im Block 14 gezeichneten Quantisierungsvorschrift, wobei die Quantisierer-Schrittweiten-Informationen bei dem im Fig. 1 gezeigten Fall dazu verwendet werden, um einen Spektralwert $x_i$ zunächst durch den Wert q zu teilen, und das Ergebnis dann mit dem Exponenten $\alpha$ ungleich 1 zu exponieren und dann gegebenenfalls einen additiven Faktor s hinzuzufügen.

Dann wird dieses Ergebnis einer Rundungsfunktion zugeführt, die bei dem in Fig. 1 gezeigten Ausführungsbeispiel den nächsten Integer auswählt. Der Integer kann definitionsgemäß wieder durch Abschneiden von Stellen hinter dem Komma, also durch "immer Abrunden" erzeugt werden. Alternativ kann der nächste Integer auch durch Abrunden bis 0,499 und Aufrunden ab 0,5 erzeugt werden. Wieder alternativ kann der nächste Integer durch "immer Aufrunden" ermittelt werden, je nach einzelner Implementierung. Statt der nint-Funktion kann jedoch auch eine beliebige Round-Funktion eingesetzt werden, die allgemein gesagt einen zu rundenden Wert aus einem ersten größeren Wertevorrat in einen kleineren zweiten Wertevorrat abbildet.

Am Ausgang der Einrichtung 14 liegt dann der quantisierte Spektralwert in dem Frequenzband an. Wie es aus der im Block 14 gezeigten Gleichung ersichtlich ist, wird die Einrichtung 14 neben der Quantisierer-Schrittweite q auch selbstverständlich der zu quantisierende Spektralwert in dem betrachteten Frequenzband zugeführt.

Es sei darauf hingewiesen, dass die Einrichtung 12 nicht unbedingt die Quantisierer-Schrittweite q direkt ausrechnen muss, sondern dass als alternative Quantisierer-Schrittweiten-Informationen auch der Skalenfaktor, wie er in bekannten Transformations-basierten Audiocodierern verwendet wird, berechnet werden kann. Der Skalenfaktor ist über die rechts vom Block 12 in Fig. 1 gezeigte Beziehung mit der tatsächlichen Quantisierer-Schrittweite verknüpft. Ist die Einrichtung zum Berechnen also ausgebildet, um als Quantisierer-Schrittweiten-Informationen den Skalenfaktor scf zu berechnen, so wird dieser Skalenfaktor der Einrichtung 14 zum Quantisieren zugeführt, die dann statt dem Wert q im Block 14 den Wert $2^{1/4 \, scf}$ zur Quantisierungsberechnung verwendet.

Nachfolgend wird eine Herleitung der im Block 12 gegebenen Form gegeben.

Wie es ausgeführt worden ist, gehorcht der Exponentialgesetz-Quantisierer, wie er im Block 14 dargestellt ist, folgender Beziehung:

$$y_i = round\left[\left(\frac{x_i}{q}\right)^{\alpha} + s\right]$$

Die inverse Operation ist folgendermaßen dargestellt:

$$x_i' = y_i^{1/\alpha} \cdot q$$

Diese Gleichung stellt somit die zur Requantisierung nötige Operation dar, wobei $y_i$ ein quantisierter Spektralwert ist, und wobei $x_i'$ ein requantisierter Spektralwert ist. q ist wieder die Quantisierer-Schrittweite, die über die in Fig. 1, rechts von Block 12 gezeigte Beziehung mit dem Skalenfaktor zusammenhängt.

Erwartungsgemäß ist das Ergebnis konsistent zu dieser Gleichung für den Fall $\alpha$ gleich 1.

Wenn nun die vorstehende Gleichung über einen Vektor der Spektralwerte aufsummiert wird, ist die gesamte Rauschleistung in einem Band, das durch den Index i bestimmt wird, folgendermaßen gegeben:

$$\sum_i \left|\Delta x_i\right|^2 \approx \frac{q^{2\alpha}}{12\alpha^2} \cdot \sum_i x_i^{2(1-\alpha)}$$

Zusammengefasst wird der erwartete Wert des Quantisierungsrauschens eines Vektor bestimmt durch die Quantisierer-Schrittweite q und einen sogenannten Formfaktor, der die Betragsverteilung der Komponenten des Vektors beschreibt.

Der Formfaktor, welcher der ganz rechte Term in der vorstehenden Gleichung ist, hängt von den tatsächlichen Eingangswerten ab und muss nur einmal berechnet werden, auch wenn die vorstehende Gleichung für unterschiedlich erwünschte Störungspegel THR berechnet wird.

Wie es bereits ausgeführt worden ist, vereinfacht sich diese Gleichung mit α gleich ¾ folgendermaßen:

$$\sum_i \left|\Delta x_i\right|^2 \approx \frac{q^{3/2}}{6.75} \cdot \sum_i \left|x_i\right|^{1/2}$$

Die linke Seite dieser Gleichung ist somit eine Schätzung der Quantisierungs-Rauschenergie, die im Grenzfall mit der erlaubten Rauschenergie (Threshold) übereinstimmt.

Es wird also folgender Ansatz gemacht:

$$\sum_i \left|\Delta x_i\right|^2 = THR$$

Die Summe über die Wurzeln der Frequenzlinien im rechten Teil der Gleichung entspricht einem Maß für die Gleichmäßigkeit der Frequenzlinien und ist als Formfaktor vorzugsweise schon im Encoder bekannt:

$$\sum_i \left|x_i\right|^{1/2} = FFAC$$

Es ergibt sich also:

$$THR \approx \frac{q^{3/2}}{6.75} \cdot FFAC$$

q entspricht hier der Quantisierer-Schrittweite. Diese ist bei AAC festgelegt als:

$$q = 2^{(1/4) \cdot scf}$$

scf ist der Skalenfaktor. Falls der Skalenfaktor zu ermitteln ist, kann die Gleichung aufgrund der Beziehung zwischen Schrittweite und Skalenfaktor folgendermaßen ausgerechnet werden:

$$THR \approx \frac{2^{(3/8)scf}}{6.75} \cdot FFAC$$

$$\Leftrightarrow 2^{(3/8)scf} = \frac{6.75 \cdot THR}{FFAC}$$

$$\Leftrightarrow scf = \frac{8}{3}\log_2\left(\frac{6.75 \cdot THR}{FFAC}\right)$$

$$\Leftrightarrow scf = \frac{8}{3\log_{10} 2}\left[\log_{10}(6.75 \cdot THR) - \log_{10}(FFAC)\right]$$

$$\Leftrightarrow scf = 8.8585 \cdot \left[\log_{10}(6.75 \cdot THR) - \log_{10}(FFAC)\right]$$

Die vorstehende Gleichung liefert somit einen geschlossenen Zusammenhang zwischen dem Skalenfaktor scf für ein Skalenfaktorband, das einen bestimmten Formfaktor hat, und für das eine bestimmte Störschwelle THR, die typischerweise vom psychoakustischen Modell stammt, gegeben ist.

Wie es bereits ausgeführt worden ist, liefert die Berechnung der Schrittweite mit Hilfe der mittleren Rauschenergie eine bessere Abschätzung, da von keinem Worst-Case-Szenario ausgegangen wird, sondern da der Erwartungswert des Quantisierungsfehlers als Grundlage verwendet wird.

Das erfindungsgemäße Konzept eignet sich somit zu einer Ermittlung der Quantisierer-Schrittweite bzw. äquivalent des Skalenfaktors für ein Skalenfaktorband ohne jegliche Iterationen.

Dennoch kann, wenn Rechenzeitanforderungen nicht ganz so streng sind, noch eine Nachverarbeitung durchgeführt werden, wie sie nachfolgend anhand von Fig. 2 dargestellt wird. In einem ersten Schritt in Fig. 2 wird die erste Quantisierer-Schrittweite geschätzt (Schritt 50). Die Schätzung der ersten Quantisierer-Schrittweite (QSW) findet unter Verwendung des anhand von Fig. 1 dargestellten Prozederes statt. Dann wird in einem Schritt 52 eine Quantisierung mit der ersten Quantisierungs-Schrittweite vorzugsweise gemäß dem Quantisierer, wie er anhand von Block 14 in Fig. 1 dargestellt ist, durchgeführt. Daraufhin wird eine Requantisierung von den mit der ersten Quantisierer-Schrittweite erhaltenen Werten durchgeführt, um dann die eingeführte Störung zu berechnen. Hierauf wird in einem Schritt 54 überprüft, ob die eingeführte Störung größer als die vorgegebene Schwelle ist.

Es sei darauf hingewiesen, dass die durch den im Block 12 dargestellten Zusammenhang berechnete Quantisierer-Schrittweite q (oder scf) eine Approximation ist. Würde der in Block 12 von Fig. 1 gegebene Zusammenhang tatsächlich exakt sein, so sollte in Block 54 festgestellt werden, dass die eingefügte Störung genau der Schwelle entspricht. Aufgrund der Approximationsnatur des Zusammenhangs im Block 12 von Fig. 1 kann die eingefügte Störung jedoch größer oder kleiner als die Schwelle THR sein.

Ferner sei darauf hingewiesen, dass die Abweichung von der Schwelle nicht besonders groß sein wird, obgleich sie dennoch vorhanden sein wird. Wird im Schritt 54 festgestellt, dass die eingefügte Störung unter Verwendung der ersten Quantisierer-Schrittweite kleiner als die Schwelle ist, wird also die Frage im Schritt 54 mit nein beantwortet, so wird der rechte Zweig in Fig. 3 genommen. Ist die eingefügte Störung kleiner als die Schwelle, so bedeutet dies, dass die Abschätzung in Block 12 in Fig. 1 zu pessimistisch war, so dass in einem Schritt 56 eine gröbere Quantisierer-Schrittweite als zweite Quantisierer-Schrittweite eingestellt wird.

Das Maß, wie gröber die zweite Quantisierer-Schrittweite im Vergleich zur ersten Quantisierer-Schrittweite ist, ist wählbar. Es wird jedoch bevorzugt, relativ kleine Inkremente zu nehmen, da die Abschätzung im Block 50 bereits relativ exakt sein wird.

In einem Schritt 58 wird dann mit der zweiten gröberen (größeren) Quantisierer-Schrittweite eine Quantisierung der Spektralwerte vorgenommen, eine anschließende Requantisierung und eine Berechnung der mit der zweiten Quantisierer-Schrittweite korrespondierenden zweiten Störung durchgeführt.

In einem Schritt (60) wird dann überprüft, ob die zweite Störung, die mit der zweiten Quantisierer-Schrittweite korrespondiert, immer noch kleiner als die ursprüngliche Schwelle ist. Ist dies der Fall, so wird die zweite Quantisierer-Schrittweite gespeichert (62), und es wird eine neue Iteration begonnen, um wieder in einem Schritt (56) eine noch gröbere Quantisierer-Schrittweite einzustellen. Dann wird mit der noch gröberen Quantisierer-Schrittweite wieder der Schritt 58, der Schritt 60 und gegebenenfalls der Schritt 62 durchgeführt, um wieder eine erneute Iteration zu beginnen. Wird dann während einer Iteration im Schritt 60 festgestellt, dass die zweite Störung nicht kleiner als die Schwelle ist, also größer als die Schwelle ist, so ist ein Abbruchkriterium erreicht, und es wird bei Erreichen des Abbruchkriteriums mit der zuletzt gespeicherten Quantisierer-Schrittweite quantisiert (64).

Nachdem die erste abgeschätzte Quantisierer-Schrittweite bereits ein relativ guter Wert war, wird die Anzahl der Iterationen im Vergleich zu schlecht abgeschätzten Startwerten reduziert sein, was zu einer signifikanten Rechenzeiteinsparung beim Codieren führt, da die Iterationen zur Berechnung der Quantisierer-Schrittweite den größten Anteil an Rechenzeit des Codierers in Anspruch nehmen.

Nachfolgend wird anhand des linken Zweigs in Fig. 2 ein erfindungsgemäßes Prozedere dargestellt, das dann verwendet wird, wenn die eingeführte Störung tatsächlich größer als die Schwelle ist.

Erfindungsgemäß wird dennoch, trotz der Tatsache, dass die eingeführte Störung bereits größer als die Schwelle ist, eine noch gröbere zweite Quantisierer-Schrittweite eingestellt (70), wobei dann in einem Schritt 72 eine Quantisierung, Requantisierung und Berechnung der mit der zweiten Quantisierer-Schrittweite korrespondierenden zweiten Rauschstörung durchgeführt wird. Hierauf wird in einem Schritt 74 überprüft, ob die zweite Rauschstörung nunmehr kleiner als die Schwelle ist. Ist dies der Fall, so wird die Frage im Schritt 74 mit "ja" beantwortet, und es wird die zweite Quantisierer-Schrittweite gespeichert (76). Wird dagegen festgestellt, dass die zweite Rauschstörung größer als die Schwelle ist, so wird entweder mit der gespeicherten Quantisierer-Schrittweite quantisiert oder, wenn keine bessere zweite Quantisierer-Schrittweite gespeichert worden ist, eine Iteration durchlaufen, bei der, wie im Stand der Technik, eine feinere zweite quantisierte Schrittweite gewählt wird, um die eingeführte Störung unter die Schwelle zu "drücken".

Nachfolgend wird dargelegt, wieso besonders dann, wenn die eingeführte Störung größer als die Schwelle ist, dennoch eine Verbesserung erreicht werden kann, wenn mit einer noch gröberen Quantisierer-Schrittweite gearbeitet wird. Bisher wurde immer davon ausgegangen, dass eine feinere Quantisierer-Schrittweite zu einer geringeren eingeführten Quantisierungsenergie führt, und dass eine größere Quantisierer-Schrittweite zu einer höheren eingeführten Quantisierungsstörung führt. Dies mag zwar im Mittel so sein; wird jedoch nicht immer und insbesondere bei eher schwach besetzten Skalenfaktorbändern und insbesondere dann, wenn der Quantisierer eine nicht-lineare Kennlinie hat, genau entgegengesetzt sein. Es wurde erfindungsgemäß herausgefunden, dass bei einer nicht zu unterschätzenden Anzahl von Fällen eine gröbere Quantisierer-Schrittweite zu einer geringeren eingeführten Störung führt. Dies ist darauf zurückzuführen, dass auch der Fall auftreten kann, dass eine gröbere Quantisierer-Schrittweite einen zu quantisierenden Spektralwert besser trifft als eine feinere Quantisierer-Schrittweite, wie es anhand des nachfolgenden Beispiels bezugnehmend auf Fig. 4 dargelegt wird.

Fig. 4 zeigt beispielhaft eine Quantisierungskennlinie (60), die vier Quantisierungsstufen 0, 1, 2, 3 liefert, wenn Eingangssignale zwischen 0 und 1 quantisiert werden. Die quantisierten Werte entsprechen 0,0, 0,25, 0,5, 0,75. Zum Vergleich ist eine andere gröbere Quantisierungskennlinie in Fig. 4 gestrichelt eingezeichnet (62), die nur 3 Quantisierungsstufen hat, die den absoluten Werten 0,0, 0,33, 0,66 entsprechen. So ist die Quantisierer-Schrittweite im ersten Fall, also bei der Quantisiererkennlinie 60 gleich 0,25, während die Quantisierer-Schrittweite im zweiten Fall, also bei der Quantisiererkennlinie 62 gleich 0,33 ist. Die zweite Quantisiererkennlinie (62) hat daher eine gröbere Quantisierer-Schrittweite als die erste Quantsiererkennlinie (60), die eine feine Quantisierungskennlinie darstellen soll. Wenn der zu quantisierende Wert $x_i=0,33$ betrachtet wird, so ist aus Fig. 4 zu sehen, dass der Fehler bei der Quantisierung mit dem feinen Quantisierer mit vier Stufen gleich der Differenz zwischen 0,33 und 0,25 beträgt und somit 0,08 ist. Dagegen ist der Fehler bei der Quantisierung mit drei Stufen aufgrund der Tatsache, dass eine Quantisierer-Stufe den zu quantisierenden Wert gewissermaßen genau "trifft", gleich 0.

Aus Fig. 4 ist daher zu sehen, dass eine gröbere Quantisierung zu einem geringeren Quantisierungsfehler führen kann als eine feinere Quantisierung.

Eine gröbere Quantisierung ist zudem dafür ausschlaggebend, dass eine geringere Ausgangsbitrate benötigt wird, da die möglichen Zustände nur drei Zustände sind, nämlich 0, 1, 2 im Gegensatz zu dem Fall des feineren Quantisierers, bei dem vier Stufen, nämlich 0, 1, 2, 3 signalisiert werden müssen. Darüber hinaus hat die gröbere Quantisierer-Schrittweite den Vorteil, dass tendenziell mehr Werte zu 0 "wegquantisiert" werden, als bei einer feineren Quantisierer-Schrittweite, bei der weniger Werte zu "0" wegquantisiert werden. Obgleich, wenn mehrere Spektralwerte in einem Skalenfaktorband betrachtet werden, das "Zu-0-Quantisieren" zu einer Erhöhung des Quantisierungsfehlers führt, kann dies nicht unbedingt problematisch werden, da die gröbere Quantisierer-Schrittweite vielleicht andere wichtigere Spektralwerte genauer trifft, so dass der Quantisierungsfehler durch die gröbere Quantisierung der anderen Spektralwerte aufgehoben wird und sogar überkompensiert wird, wobei zugleich eine kleinere Bitrate anfällt.

In anderen Worten ausgedrückt wird also ein insgesamt "besseres" Codierergebnis erreicht, da eine zu signalisierende geringere Anzahl von Zuständen und zugleich ein besseres "Treffen" der Quantisierungsstufen durch das erfindungsgemäße Konzept erreicht werden.

Erfindungsgemäß wird somit, wie es anhand von Fig. 2 im linken Zweig dargestellt worden ist, ausgehend von Schätzwerten (Schritt 50 in Fig. 2) dann, wenn die eingeführte Störung größer als die Schwelle ist, dennoch eine noch gröbere Quantisierer-Schrittweite versucht, um von dem anhand von Fig. 4 dargestellten Effekt zu profitieren. Es hat sich ferner herausgestellt, dass dieser Effekt bei nichtlinearen Quantisierern noch signifikanter zutage tritt als bei dem in Fig. 4 skizzierten Fall zweier linearer Quantisierer-Kennlinien.

Das dargestellte Konzept der Quantisierer-Schrittweite-Nachbearbeitung bzw. Skalenfaktor-Nachbearbeitung dient somit zur Verbesserung des Ergebnisses des Skalenfaktorschätzers.

Ausgehend von den Quantisierer-Schrittweiten, die im Skalenfaktorschätzer (50 in Fig. 2) bestimmt wurden, werden in der Analyse-Durch-Synthese-Stufe neue möglichst große Quantisierer-Schrittweiten bestimmt, für die die Fehlerenergie kleiner als der vorgegebene Schwellwert ist.

Zunächst wird also das Spektrum mit den berechneten Quantisierer-Schrittweiten quantisiert, und die Energie des Fehlersignals, also vorzugsweise die Quadratsumme der Differenz aus originalen und quantisierten Spektralwerten bestimmt . Alternativ kann zur Fehlerbestimmung auch ein korrespondierendes Zeitsignal verwendet werden, obgleich die Verwendung von Spektralwerten bevorzugt wird.

Die Quantisierer-Schrittweite und das Fehlersignal werden als bisher bestes Ergebnis gespeichert. Liegt die berechnete Störung über einem Schwellwert, so wird folgendermaßen vorgegangen:

Der Skalenfaktor innerhalb eines vorgegebenen Bereichs wird um den ursprünglich berechneten Wert variiert, wobei insbesondere auch gröbere Quantisierer-Schrittweiten verwendet werden (70).

Für jeden neuen Skalenfaktor wird das Spektrum erneut quantisiert und die Energie des Fehlersignals berechnet. Ist das Fehlersignal kleiner als das kleinste bisher berechnete, so werden die aktuelle Quantisierer-Schrittweite zusammen mit der Energie des zugehörigen Fehlersignals als bisher bestes Ergebnis zwischengespeichert.

Hierbei werden erfindungsgemäß nicht nur kleinere, sondern auch größere Skalierungsfaktoren berücksichtigt, um insbesondere dann, wenn der Quantisierer ein nicht-linearer Quantisierer ist, von dem anhand von Fig. 4 beschriebenen Konzept zu profitieren.

Liegt die berechnete Störung dagegen unterhalb des Schwellwerts, war also die Schätzung im Schritt 50 zu pessimistisch, so wird der Skalenfaktor innerhalb eines vorgegebenen Bereichs um den ursprünglich berechneten Wert variiert.

Für jeden neuen Skalenfaktor wird das Spektrum erneut quantisiert und die Energie des Fehlersignals berechnet.

Ist das Fehlersignal kleiner als das kleinste bisher berechnete, so wird die aktuelle Quantisierer-Schrittweite zusammen mit der Energie des zugehörigen Fehlersignals als bisher bestes Ergebnis zwischengespeichert.

Dabei werden jedoch nur gröbere Skalierungsfaktoren berücksichtigt, um die Anzahl an Bits, die für die Codierung des Audiospektrums benötigt werden, zu reduzieren.

Abhängig von der Gegebenheit, kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird.

Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programmcode zur Durchführung des Verfahrens realisiert werden, wenn das Computer-Programm auf einem Computer abläuft.

**Patentansprüche**

1. Vorrichtung zum Ermitteln einer Quantisierer-Schrittweite zum Quantisieren eines Signals, das Audio- oder Videoinformationen aufweist, mit folgenden Merkmalen:

   einer Einrichtung (502) zum Liefern einer ersten Quantisierer-Schrittweite und einer Störungsschwelle;
   einer Einrichtung (504) zum Bestimmen einer durch die erste Quantisierer-Schrittweite eingeführten ersten Störung;
   einer Einrichtung (506) zum Vergleichen der durch die erste Quantisierer-Schrittweite eingeführten Störung mit der Störungsschwelle;
   einer Einrichtung (508) zum Wählen einer zweiten Quantisierer-Schrittweite, die größer als die erste Quantisierer-Schrittweite ist, wenn die eingeführte erste Störung größer als die Störungsschwelle ist;
   einer Einrichtung (510) zum Bestimmen einer durch die zweite Quantisierer-Schrittweite eingeführten zweiten Störung;
   einer Einrichtung (512) zum Vergleichen der eingeführten zweiten Störung mit der Störungsschwelle oder der eingeführten ersten Störung; und
   einer Einrichtung (514) zum Quantisieren des Signals mit der zweiten Quantisierer-Schrittweite, wenn die eingeführte zweite Störung kleiner als die eingeführte erste Störung oder kleiner als die Störungsschwelle ist.

2. Vorrichtung nach Anspruch 1, bei der das Signal ein Audiosignal ist und Spektralwerte einer Spektraldarstellung des Audiosignals aufweist, und bei der die Einrichtung (502) zum Liefern als psychoakustisches Modell ausgebildet ist, das eine erlaubte Störung für ein Frequenzband, basierend auf einer psychoakustischen Maskierungsschwelle berechnet.

3. Vorrichtung nach Anspruch 1 oder 2, bei der die Einrichtung (504) zum Bestimmen der eingeführten ersten Störung oder die Einrichtung (510) zum Berechnen der eingeführten zweiten Störung ausgebildet ist, um unter Verwendung einer Quantisierer-Schrittweite zu quantisieren, um unter Verwendung der Quantisierer-Schrittweite zu requantisieren, und um einen Abstand zwischen dem requantisierten Signal und dem Signal zu berechnen, um die eingeführte Störung zu erhalten.

4. Vorrichtung nach einem der vorhergehenden Ansprüche, bei der die Einrichtung (502) zum Liefern der ersten Quantisierer-Schrittweite ausgebildet ist, um die Quantisierer-Schrittweite gemäß folgender Gleichung zu berechnen:

$$\sum_i |\Delta x_i|^2 \approx \frac{q^{2\alpha}}{12\alpha^2} \cdot \sum_i x_i^{2(1-\alpha)}$$

bei der die Einrichtung (514) zum Quantisieren ausgebildet ist, um gemäß der folgenden Gleichung zu quantisieren.

$$y_i = round\left[\left(\frac{x_i}{q}\right)^\alpha + s\right]$$

wobei $x_i$ ein zu quantisierender Spektralwert ist, wobei $q$ die Quantisierer-Schrittweiten-Informationen darstellt, wobei $s$ eine Zahl ungleich oder gleich Null ist, wobei $\alpha$ ein Exponent ungleich "1" ist, wobei Round eine Rundungsfunktion ist, die einen Wert aus einem ersten größeren Wertebereich in einen Wert in einem zweiten kleineren Wertebereich abbildet, wobei $\sum_i |\Delta x_i|^2$ (THR) die erlaubte Störung ist, und wobei $i$ ein Laufindex für Spektralwerte in dem Frequenzband ist.

5. Vorrichtung nach einem der vorhergehenden Ansprüche, bei der die Einrichtung (508) zum Wählen ferner ausgebildet ist, um dann, wenn die eingeführte Störung kleiner als die erlaubte Störung ist, eine größere Quantisierer-Schrittweite zu wählen.

6. Vorrichtung nach einem der vorhergehenden Ansprüche, bei der die Einrichtung (502) zum Liefern ausgebildet ist, um die erste Quantisierer-Schrittweite als Ergebnis einer Analyse/Synthese-Ermittlung zu liefern.

7. Vorrichtung nach einem der vorhergehenden Ansprüche, bei der die Einrichtung (508) zum Wählen ausgebildet ist, um eine Quantisierer-Schrittweite für ein Frequenzband, unabhängig von einer Quantisierer-Schrittweite für ein anderes Frequenzband zu verändern.

8. Vorrichtung nach einem der vorhergehenden Ansprüche, bei der die Einrichtung (502) zum Liefern ausgebildet ist, um die erste Quantisierer-Schrittweite als Ergebnis eines vorausgehenden Iterationsschritts mit einer Vergröberung der Quantisierer-Schrittweite zu ermitteln, und bei dem die Störungsschwelle eine durch eine im vorausgehenden Iterationsschritt zum Bestimmen der ersten Quantisierer-Schrittweite eingeführte Störung ist.

9. Verfahren zum Ermitteln einer Quantisierer-Schrittweite zum Quantisieren eines Signals, das Audio- oder Videoinformationen aufweist, mit folgenden Schritten:

Liefern (502) einer ersten Quantisierer-Schrittweite und einer Störungsschwelle;
Bestimmen (504) einer durch die erste Quantisierer-Schrittweite eingeführten ersten Störung;
Vergleichen (506) der durch die erste Quantisierer-Schrittweite eingeführten Störung mit der Störungsschwelle;
Wählen (508) einer zweiten Quantisierer-Schrittweite, die größer als die erste Quantisierer-Schrittweite ist, wenn die eingeführte erste Störung größer als die Störungsschwelle ist;
Bestimmen (510) einer durch die zweite Quantisierer-Schrittweite eingeführten zweiten Störung;
Vergleichen (512) der eingeführten zweiten Störung mit der Störungsschwelle oder der eingeführten ersten Störung;
Quantisieren (514) des Signals mit der zweiten Quantisierer-Schrittweite, wenn die eingeführte zweite Störung kleiner als die eingeführte erste Störung oder kleiner als die Störungsschwelle ist.

10. Computerprogramm mit einem Programmcode angepasst zum Ausführen des Verfahrens gemäß Patentanspruch 9, wenn das Computerprogramm auf einem Computer abläuft.


**Claims**

1. Apparatus for determining a quantizer step size for quantizing a signal comprising audio or video information, the apparatus comprising:

means (502) for providing a first quantizer step size and an interference threshold;
means (504) for determining a first interference introduced by the first quantizer step size;
means (506) for comparing the interference introduced by the first quantizer step size with the interference threshold;
means (508) for selecting a second quantizer step size which is larger than the first quantizer step size if the first interference introduced is greater than the interference threshold;
means (510) for determining a second interference introduced by the second quantizer step size;
means (512) for comparing the second interference introduced with the interference threshold or the first interference introduced; and
means (514) for quantizing the signal with the second quantizer step size if the second interference introduced is smaller than the first interference introduced or is smaller than the interference threshold.

2. Apparatus as claimed in claim 1, wherein the signal is an audio signal and comprises spectral values of a spectral representation of the audio signal, and wherein the means (502) for providing is configured as a psycho-acoustic model which calculates a permitted interference for a frequency band on the basis of a psycho-acoustic masking threshold.

3. Apparatus as claimed in claims 1 or 2, wherein the means (504) for determining the first interference introduced, or the means (510) for calculating the second interference introduced is configured to quantize using a quantizer step size, to re-quantize using the quantizer step size, and to calculate a distance between the re-quantized signal and the signal so as to obtain the interference introduced.

4. Apparatus as claimed in any of the previous claims, wherein the means (502) for providing the first quantizer step size is configured to calculate the quantizer step size in accordance with the following equation:

$$\sum_i \left|\Delta x_i\right|^2 \approx \frac{q^{2\alpha}}{12\alpha^2} \cdot \sum_i x_i^{2(1-\alpha)}$$

wherein the means (514) for quantizing is configured to quantize in accordance with the following equation:

$$y_i = round\left[\left(\frac{x_i}{q}\right)^\alpha + s\right]$$

wherein $x_i$ is a spectral value to be quantized, wherein q represents the quantizer step size information, wherein s is a figure differing from or equaling zero, wherein $\alpha$ is an exponent different from "1", wherein round is a rounding function which maps a value from a first, larger range of values to a value within a second, smaller range of values, wherein $\sum_i \left|\Delta x_i\right|^2$ (THR) is the permitted interference, and wherein $i$ is a run index for spectral values in the frequency band.

5. Apparatus as claimed in any of the previous claims, wherein the means (508) for selecting is further configured to select a larger quantizer step size when the interference introduced is smaller than the permitted interference.

6. Apparatus as claimed in any of the previous claims, wherein the means (502) for providing is configured to provide the first quantizer step size as a result of an analysis/synthesis determination.

7. Apparatus as claimed in any of the previous claims, wherein the means (508) for selecting is configured to alter a quantizer step size for one frequency band independently of a quantizer step size for another frequency band.

8. Apparatus as claimed in any of the previous claims, wherein the means (502) for providing is configured to determine the first quantizer step size as a result of a preceding iteration step with a coarsening of the quantizer step size, and wherein the interference threshold is an interference introduced in the preceding iteration step for determining the first quantizer step size.

9. Method for determining a quantizer step size for quantizing a signal comprising audio or video information, the method comprising:

    providing (502) a first quantizer step size and an interference threshold;
    determining (504) a first interference introduced by the first quantizer step size;
    comparing (506) the interference introduced by the first quantizer step size with the interference threshold;
    selecting (508) a second quantizer step size which is larger than the first quantizer step size if the first interference introduced is greater the interference threshold;
    determining (510) a second interference introduced by the second quantizer step size;
    comparing (512) the second interference introduced with the interference threshold or the first interference introduced;
    quantizing (514) the signal with the second quantizer step size if the second interference introduced is smaller than the first interference introduced or is smaller than the interference threshold.

10. A computer program having a program code adapted for performing the method as claimed in claim 9, when the computer program runs on a computer.

## Revendications

1. Dispositif pour déterminer un pas de quantification pour la quantification d'un signal présentant des informations audio ou vidéo, aux caractéristiques suivantes:

   un moyen (502) destiné à fournir un premier pas de quantification et un seuil d'interférence;
   un moyen (504) destiné à déterminer une première interférence introduite par le premier pas de quantification;
   un moyen (506) destiné à comparer l'interférence introduite par le premier pas de quantification avec le seuil d'interférence;
   un moyen (508) destiné à sélectionner un deuxième pas de quantification qui est supérieur au premier pas de quantification, lorsque la première interférence introduite est supérieure au seuil d'interférence;
   un moyen (510) destiné à déterminer une deuxième interférence introduite par le deuxième pas de quantification;
   un moyen (512) destiné à comparer la deuxième interférence introduite avec le seuil d'interférence ou la première interférence introduite; et
   un moyen (514) destiné à quantifier le signal par le deuxième pas de quantification, lorsque la deuxième interférence introduite est inférieure à la première interférence introduite ou inférieure au seuil d'interférence.

2. Dispositif selon la revendication 1, dans lequel le signal est un signal audio et présente des valeurs spectrales d'une représentation spectrale du signal audio, et dans lequel le moyen (502) destiné à fournir est réalisé sous forme de modèle psycho-acoustique qui calcule une interférence admise pour une bande de fréquences, sur base d'un seuil de masquage psycho-acoustique.

3. Dispositif selon la revendication 1 ou 2, dans lequel le moyen (504) destiné à déterminer la première interférence introduite ou le moyen (510) pour calculer la deuxième interférence introduite est réalisé de manière à quantifier à l'aide d'un pas de quantification, pour requantifier à l'aide du pas de quantification, et à calculer une distance entre le signal requantifié et le signal, pour obtenir l'interférence introduite.

4. Dispositif selon l'une des revendications précédentes, dans lequel le moyen (502) destiné à fournir le premier pas de quantification est réalisé de manière à calculer le pas de quantification selon l'équation suivante:

$$\sum_i \left|\Delta x_i\right|^2 \approx \frac{q^{2\alpha}}{12\alpha^2} \cdot \sum_i x_i^{2(1-\alpha)}$$

dans lequel le moyen (514) destiné à quantifier est réalisé de manière à quantifier selon l'équation suivante:

$$y_i = round\left[\left(\frac{x_i}{q}\right)^{\alpha} + s\right]$$

où $x_i$ est une valeur spectrale à quantifier, q représentant les informations de pas de quantification, s étant un nombre différent de ou égal à zéro, $\alpha$ étant un exposant différent de "1", round étant une fonction d'arrondi qui reproduit une valeur d'une première grande plage de valeurs en une valeur dans une deuxième plage de valeurs plus petite, $\sum_i \left|\Delta x_i\right|^2$ (THR) étant 1□interférence admise, et $_i$ étant un indice courant pour les valeurs spectrales dans la bande de fréquences.

5. Dispositif selon l'une des revendications précédentes, dans lequel le moyen (508) destiné à sélectionner est, par ailleurs, réalisé de manière à sélectionner, lorsque l'interférence introduite est inférieure à l'interférence admise, un pas de quantification supérieur.

6. Dispositif selon l'une des revendications précédentes, dans lequel le moyen (502) destiné à fournir est réalisé de manière à fournir le premier pas de quantification comme résultat d'une détermination d'analyse/de synthèse.

7. Dispositif selon l'une des revendications précédentes, dans lequel le moyen (508) destiné à sélectionner est réalisé de manière à modifier un pas de quantification pour une bande de fréquences, indépendamment d'un pas de quantification pour une autre bande de fréquences.

8. Dispositif selon l'une des revendications précédentes, dans lequel le moyen (502) destiné à fournir est réalisé de manière à déterminer le premier pas de quantification comme résultat d'une étape d'itération précédente avec un agrandissement du pas de quantification, et dans lequel le seuil d'interférence est une interférence introduite par un pas de quantification déterminé dans l'étape d'itération pour déterminer le premier pas de quantification précédente.

9. Procédé pour déterminer un pas de quantification pour la quantification d'un signal présentant des informations audio ou vidéo, aux étapes suivantes consistant à:

   fournir (502) un premier pas de quantification et un seuil d'interférence;
   déterminer (504) une première interférence introduite par le premier pas de quantification;
   comparer (506) l'interférence introduite par le premier pas de quantification avec le seuil d'interférence;
   sélectionner (508) un deuxième pas de quantification qui est supérieur au premier pas de quantification, lorsque la première interférence introduite est supérieure au seuil d'interférence;
   déterminer (510) une deuxième interférence introduite par le deuxième pas de quantification;
   comparer (512) la deuxième interférence introduite avec le seuil d'interférence ou la première interférence introduite;
   quantifier (514) le signal par le deuxième pas de quantification, lorsque la deuxième interférence introduite est inférieure à la première interférence introduite ou inférieure au seuil d'interférence.

10. Programme d'ordinateur avec un code de programme adapté pour réaliser le procédé selon la revendication 9, lorsque le programme d'ordinateur est exécuté sur un ordinateur.

$$\text{THR (FREQUENZBAND)}$$

Block 10: EINRICHTUNG ZUM LIEFERN EINER ERLAUBTEN STÖRUNG

SPEKTRALWERTE IM FREQUENZBAND

Block 12: EINRICHTUNG ZUM BERECHNEN DER QUANTISIER-SCHRITTW.INFORMATIONEN

$$THR = \frac{q^{2\alpha}}{12\alpha^2}\sum x_i^{2(1-\alpha)}$$

$$q = 2^{\frac{1}{4}\cdot scf}$$

$$q$$

SPEKTRALWERTE IM FREQUENZBAND

Block 14: EINRICHTUNG ZUM QUANTISIEREN

$$y_i = nint\left[\left(\frac{x_i}{q}\right)^{\alpha} + s\right]$$

$$\alpha \neq 1$$

QUANTISIERTE SPEKTRALWERTE IM FREQUENZBAND

## FIG. 1

SCHÄTZEN EINER 1. QUANTISIERER-
SCHRITTWEITE ~50

↓

QUANTISIEREN MIT DER 1. QSW
REQUANTIS. MIT DER 1. QSW
BERECHNUNG DER EINGEF. STÖRUNG ~52

↓

54
JA ← EINGEFÜHRTE STÖRUNG
GRÖSSER ALS SCHWELLE → NEIN

**Linker Zweig (JA):**

70
EINSTELLEN EINER GRÖBEREN
2. QSW

↓

72
QUANTIS., REQUANTISIEREN,
BERECHNEN DER 2. STÖRUNG

↓

74
2. ERLAUBTE STÖRUNG
≤ SCHWELLE ODER 1. STÖRUNG

NEIN ↓    JA ↓  76

2. QSW SPEICHERN

BEI ERREICHEN DES ABBRUCH-
KRITERIUMS, QUANTISIEREN
MIT GESPEICHERTER QSW ~80

ODER: ITERATION MIT
KLEINERER/FEINERER QSW

**Rechter Zweig (NEIN):**

56
EINSTELLEN EINER GRÖBEREN
2. QSW

↓

58
QUANTIS., REQUANTISIEREN,
BERECHNEN DER 2. STÖRUNG

↓

60
NEIN ← 2. STÖRUNG KLEINER ALS
SCHWELLE

JA ↓  62

2. QSW SPEICHERN

BEI ERREICHEN DES ABBRUCH-
KRITERIUMS, QUANTIS. UND
GESP. QSW

64

FIG. 2

1000

ZU CODIERENDES
AUDIOSIGNAL

SKALIERUNG — 1002

1008

FENSTER-
LÄNGEN-
ENTSCHEIDG.

1006

FILTERBANK

1004

BIT-
STROM-
FORMA-
TIERER

CODIERTES
AUDIO-
SIGNAL

SPEKTRALE
VERARBEI-
TUNG

1010

TNS-
VERARBEITUNG

PSYCHO-
AKUSTISCHES
MODELL — 1020

MITTE/SEITE
CODIERER

1012

QUANTISIERER
(SKALEN-
FAKTOR-COD.)

1014

ERLAUBTE
STÖRUNG

ENTROPIE-
CODIERER

1016

FIG. 3
(STAND DER TECHNIK)

20

-FEHLER BEI QUANTISIERUNG MIT 4 STUFEN (FEINE QU.)
0,33-0,25=0,08

- FEHLER BEI QUANTISIERUNG MIT 3 STUFEN (GROBE QU.)
0,33-0,33=0,00

FIG. 4

500— | SIGNAL

┌─────────────────────────────┐
│ EINRICHTUNG ZUM LIEFERN      │
│ DER 1. QSW UND DER           │ —502
│ EINFÜHRBAREN STÖRUNG         │
└─────────────────────────────┘

1. QSW          THR

SIGNAL → ┌─────────────────────────────┐
         │ EINRICHTUNG ZUM BE-          │
         │ STIMMEN DER TATSÄCHLICH      │ —504
         │ EINGEF. 1. STÖRUNG           │
         └─────────────────────────────┘

TATSÄCHLICH
EINGEF. 1. STÖRUNG

┌─────────────────────────────┐
│ EINRICHTUNG ZUM             │ ← THR
│ VERGLEICHEN                  │
└─────────────────────────────┘ —506

1. TATSÄCHLICHE
STÖRUNG GRÖSSER

┌─────────────────────────────┐
│ EINRICHTUNG ZUM WÄHLEN      │
│ DER 2. QSW (GRÖBER ALS       │ —508
│ 1. QSW)                      │
└─────────────────────────────┘

2. QSW

SIGNAL → ┌─────────────────────────────┐
         │ EINRICHTUNG ZUM BE-          │
         │ STIMMEN DER TATSÄCHLICH      │ —510
         │ EINGEF. 2. STÖRUNG           │
         └─────────────────────────────┘

TATSÄCHLICH
EINGEF. 2. STÖRUNG

                                    TATSÄCHLICH EINGEF.
                                    1. STÖRUNG
┌─────────────────────────────┐
│ EINRICHTUNG ZUM              │ ←
│ VERGLEICHEN                  │ ← THR
└─────────────────────────────┘
                                    512
TATSÄCHLICH EINGEF.
2. STÖRUNG KLEINER

SIGNAL →                            —514
         ┌─────────────────────────────┐
2. QSW → │ EINRICHTUNG ZUM              │
         │ QUANTISIEREN                 │ → QUANTISIERTES
         └─────────────────────────────┘   SIGNAL

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. R. QUACKENBUSH.** Coding of Natural Audio in MPEG-4. *Proceedings of the 1998 IEEE International Conference on Acoustics, Speech and Signal Processing, ICASSP' 98,* 12. Mai 1998, vol. 6, 3797-3800